# EUROPEAN PATENT APPLICATION

(11) **EP 4 583 235 A1**
(43) Date of publication of application: **09.07.2025**
(21) Application number: 23860376.5
(22) Date of filing: 29.08.2023
(51) Int. Cl.: H01M 10/0585, H01M 10/0562

(54) **BATTERY AND MULTILAYER STRUCTURE FOR BATTERIES**

(30) Priority: 31.08.2022 JP 2022137593
(71) Applicant: Mitsui Mining & Smelting Co., Ltd., Shinagawa-ku Tokyo 141-8584 (JP)
(72) Inventor: INOUE, Daisuke, Ageo-shi, Saitama 362-0021 (JP); CHIKUMOTO, Takashi, Ageo-shi, Saitama 362-0021 (JP)
(74) Representative: Novagraaf Technologies
(86) International application number: PCT/JP2023/031340
(87) International publication number: WO 2024/048614

(57) **Abstract**

A battery 10 including a self-supporting laminate structure is provided. The laminate structure includes a solid electrolyte sheet 11 containing a solid electrolyte, a first active material layer 12 containing a first active material on one major surface of the solid electrolyte sheet 11, and a second active material layer 13 containing a second active material on the other major surface of the solid electrolyte sheet 11. The solid electrolyte sheet 11 preferably has a first extending portion 11C extending outwardly from the periphery of the first active material layer 12 or, a second extending portion 11D extending outwardly from the periphery of the second active material layer 13.

## Description

### Technical Field

The present invention relates to a battery and a laminate structure for batteries.

### Background Art

In recent years, secondary batteries have attracted attention as an approach to reducing CO₂ emissions to prevent global warming. Bipolar batteries are known as a type of secondary batteries for use as a power source for automotive vehicles because of their small size and high energy density. A bipolar battery includes a solid electrolyte layer having a positive electrode active material layer containing a current collector on one side and a negative electrode active material layer containing a current collector on the other side. In order to avoid misalignment of the electrode active material layers on the opposite sides of the solid electrolyte layer, the areas of the electrode active material layers, i.e., the areas of the respective current collectors are designed to be larger than the area of the solid electrolyte layer. This design may cause a short circuit due to the electrical connection between the adjacent current collectors. This problem has generally been solved by inserting an insulator between the current collectors.

However, in the above-mentioned bipolar batteries, the insertion of an insulator increases the number of manufacturing steps and makes the battery structure complicated. It also increases the weight of the battery.

In view of the above problems, a technique of using a current collector having a higher conductivity in the thickness direction than in the planar direction is proposed in patent literature 1 below.

### Citation List

### Patent Literature:

Patent literature 1: JP 2007-213930A

### Summary of Invention

According to the technique of patent literature 1, the current collectors must be composed of a non-conductive polymer material and conductive particles. This not only limits the choice of materials but also complicates the manufacturing steps of the current collectors.

Accordingly, an object of the invention is to provide a battery design that has a simple structure and yet is protected against the occurrence of a short circuit.

In order to solve the above problem, the inventors have conducted extensive investigations and as a result have found that the use of a solid electrolyte sheet as a solid electrolyte layer makes it possible to form an electrode layer in a freely selected region of the solid electrolyte sheet, thereby preventing the occurrence of a short circuit.

The invention provides a battery including a self-supporting laminate structure. The laminate structure includes a solid electrolyte sheet containing a solid electrolyte, a first active material layer containing a first active material on one of the major surfaces of the solid electrolyte sheet, and a second active material layer containing a second active material on the other major surface of the solid electrolyte sheet.

The invention also provides a laminate structure for batteries. The laminate structure includes a solid electrolyte sheet containing a solid electrolyte, a first active material layer containing a first active material on one of the major surfaces of the solid electrolyte sheet, and a second active material layer containing a second active material on the other major surface of the solid electrolyte sheet.

### Brief Description of Drawings

[Fig. 1] Fig. 1(a) is a perspective view of a laminate structure for batteries according to an embodiment of the invention. Fig. 1(b) is a cross-sectional view taken along line I-I of Fig. 1(a).
[Fig. 2] Fig. 2 is a perspective view of a laminate structure for batteries according to another embodiment of the invention. Fig. 2(b) is a cross-sectional view taken along line II-II of Fig. 2(a).
[Fig. 3] Fig. 3(a) is a perspective view showing a laminate structure precursor in the production of the laminate structure of Fig. 2(a). Fig. 3(b) is a cross-sectional view taken alone line III-III of Fig. 3(a).

### Description of Embodiments

The invention will be illustrated on the basis of its preferred embodiments.

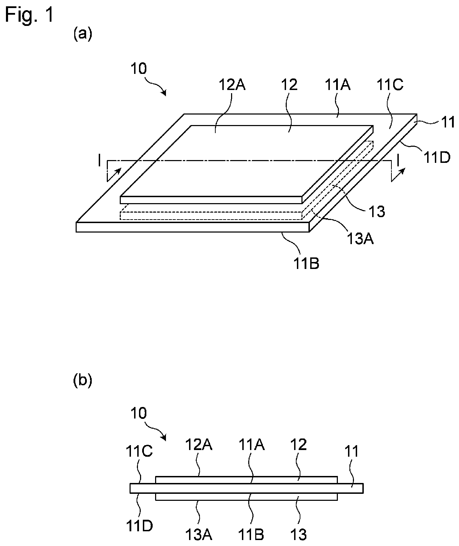

Fig. 1 represents a schematic structure of a battery according to an embodiment of the invention, hereinafter a first embodiment, of which Fig. 1(a) is a perspective of a laminate structure of the battery, and Fig. 1(b) is a cross-section taken along broken line I-I of Fig. 1(a).

The battery 10 shown in Fig. 1 includes a self-supporting solid electrolyte sheet 11 containing a solid electrolyte, a first active material layer 12 that is formed on one major surface 11A (side 11A), and a second active material layer 13 that is formed on the other major surface 11B (side 11B). The battery 10 includes a laminate structure for batteries, the laminate structure including these three members 11, 12, and 13. The laminate structure has the three members 11, 12, and 13 in an integrated configuration. As a result, the laminate structure is *per se* self-supporting as will be described later and therefore has high handling characteristics.

As used herein, the term "integrated" means that any two adjacent ones of the three members 11, 12, and 13 are configured to be inseparable from each other during normal handling. Self-supporting ability means the rigidity of the laminate structure, and "to be self-supporting" means having the ability to maintain its form without the use of a separate component from the laminate structure. The term "sheet" refers to a member having an opposed pair of a first major surface (first side) and a second major surface (second side) and an extremely small thickness relative to the planar dimensions, i.e., the distance between the two major surfaces is, for examples, less than one hundredth of the planar dimensions.

The battery 10 of the first embodiment includes the self-supporting solid electrolyte sheet 11. The self-supporting solid electrolyte sheet 11 is capable of providing the battery 10 having a self-supporting laminate structure. As will be described, the self-supporting solid electrolyte sheet 11 allows the first active material layer 12 and the second active material layer 13 to be formed thereon in any desired regions. For example, the first active material layer 12 and the second active material layer 13 are allowed to be formed in substantially the central areas of the first side 11A and the second side 11B, respectively, of the solid electrolyte sheet 11 as illustrated in Fig. 1. In such a case, the solid electrolyte sheet 11 has a first extending portion 11C extending outwardly from the periphery of the first active material layer 12, hereinafter "a first peripheral portion 11C" or a second extending portion 11D extending outwardly from the periphery of the second active material layer 13, hereinafter "a second peripheral portion 11D".

Therefore, when a plurality of the batteries 10 of the first embodiment are stacked to form a bipolar battery, the contact of the adjacent first and second active material layers 12 and 13 and a resultant short circuit are effectively avoided. That is, the use of the self-supporting solid electrolyte sheet 11 as a solid electrolyte layer makes it possible to provide the battery 10 having a self-supporting laminate structure, which has a simplified structure and is yet prevented from occurring a short circuit between the electrodes, i.e., between the first active material layer 12 and the second active material layer 13.

Specifically, when both the first and second sides 11A and 11B of the solid electrolyte sheet 11 have an area A, the major surface 12A of the first active material layer 12 or the major surface 13A of the second active material layer 13 has an area B, and one of the first peripheral portion 11C and the second peripheral portion 11D which is larger in area than the other has an area C, the ratio of the area C to the area A can preferably be 1/20 or less, more preferably 1/25 or less, even more preferably 1/30 or less. In other words, in order to prevent the occurrence of a short circuit, the area of the solid electrolyte sheet 11 need not be larger than necessary. This allows the structure of the battery 10 to be simplified, which of course leads to a reduction in the size of the battery 10.

As stated, the first peripheral portion 11C and the second peripheral portion 11D are the portions of the solid electrolyte sheet 11 that extend outwardly beyond the areas where the first active material layer 12 and the second active material layer 13, respectively, are formed.

It is preferred that the first peripheral portion 11C extend outwardly from the entire periphery of the first active material layer 12. Likewise, it is preferred that the second peripheral portion 11D extend outwardly from the entire periphery of the second active material layer 13.

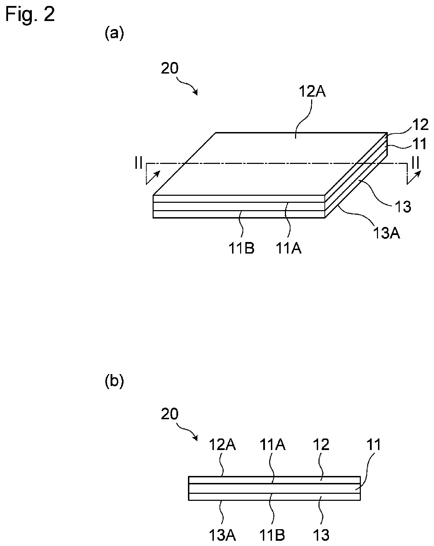

Fig. 2 shows a schematic of a laminate structure for batteries according to another embodiment of the invention, hereinafter a second embodiment. Fig. 2(a) is a perspective of the laminate structure, and Fig. 2(b) is a cross-section taken along broken line II-II of Fig. 2(a). The constituent elements in Fig. 2 that are the same as or similar to those of the laminate structure of Fig. 1 are identified by the same numerals as in Fig. 1.

The laminate structure, which is of a battery 20 shown in Fig. 2, is an embodiment in which the ratio of area C to area A, as referred to in the embodiment of Fig. 1, is 0. To put it in another way, area A of the solid electrolyte sheet 11 is equal to area B of the first active material layer 12 and the second active material layer 13, and there is neither the first peripheral portion 11C nor the second peripheral portion 11D. Therefore, the peripheral edge of the solid electrolyte sheet 11 is aligned with those of the first active material layer 12 and the second active material layer 13 in plan view.

In the second embodiment, since area A of the solid electrolyte sheet 11 is equal to area B of the first and second active material layers 12 and 13, the battery 20 can have not only a simplified structure but also a further reduced size. Therefore, even when multiple battery cells (batteries 20) are connected to form a given battery, the battery can be made smaller.

It should be noted that the cell structure of Fig. 2 is also found in known literature, but such a structure is depicted in a simplified form for the sake of convenience and is not a structure in which the area of a solid electrolyte sheet is the same as the area of active material layers, as in the case of the battery 20 of the second embodiment of the invention.

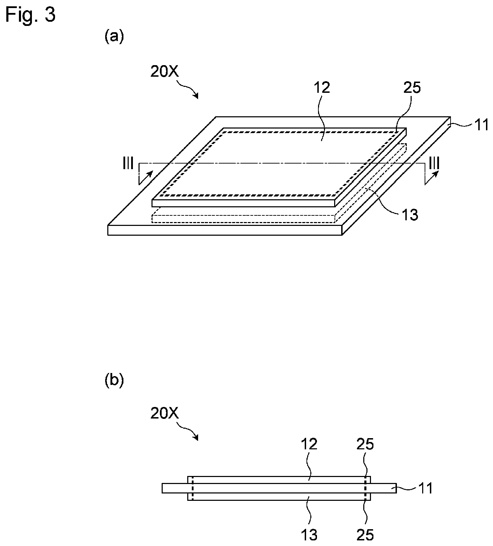

In fact, the laminate structure used in the battery 20 of Fig.2 is obtained by setting a predetermined die-cut portion 25 in a laminate structure precursor 20X and die-cutting the die-cut portion 25 in the thickness direction as shown in in Figs. 3(a) and 3(b). This manufacturing process is unknown, so that the battery 20 having the laminate structure of Fig. 2 produced by such an unknown process is, of course, unknown. Fig. 3(a) is a perspective of the laminate structure precursor for producing the battery of Fig. 2(a), and Fig. 3(b) is a cross-section taken along line III-III of Fig. 3(a).

The term "die-cut portion 25" refers to the portion adapted to pierce the thickness directions of all of the solid electrolyte sheet 11, first active material layer 12, and second active material layer 13 in a plan view of the laminate structure.

The solid electrolyte sheet 11 preferably has a thickness of at least 3 µm, more preferably 5 µm or more, even more preferably 10 µm or more, and 100 µm or less, more preferably 80 µm or less, even more preferably 15 µm or less. With the thickness in this range, the solid electrolyte sheet 11 and eventually the solid electrolyte will have an increased relative density, which increases the ion conductivity while keeping the electron conductivity low, and at the same time the mechanical strength will be improved.

The thickness of the solid electrolyte sheet 11 is measured, for example, by observing its cross-section microscopically or using a gauge. In either case, the measurement should be taken at at least 10 random positions to obtain an arithmetic mean, which is defined as the thickness of the solid electrolyte sheet 11.

The solid electrolyte sheet 11 for use in the invention preferably includes a solid electrolyte and a support (unshown), whereby the solid electrolyte sheet 11 has an enhanced self-supporting ability and improved handling characteristics and more successfully provides the laminate structure constituting the batteries 10 and 20.

The proportion of the solid electrolyte in the solid electrolyte sheet 11 is preferably at least 50.0 mass%, more preferably 70.0 mass% or higher, even more preferably 90.0 mass% or higher and preferably 99.5 mass% or lower. With the amount of the solid electrolyte in the solid electrolyte sheet 11 being within this range, the solid electrolyte sheet 11 will have improved relative density, ion conductivity, and mechanical strength. The upper limit of the proportion of the solid electrolyte in the solid electrolyte sheet is 100 mass%.

The solid electrolyte sheet 11 may have a porosity of, e.g., 1% or more, 1.5% or more, or 2% or even more. The porosity of the solid electrolyte sheet 11 should preferably be 50% or less, more preferably 45% or less, even more preferably 30% or less. With the porosity falling within this range, improved relative density, ion conductivity, and mechanical strength are ensured.

The support is preferably a porous substrate, and the solid electrolyte is preferably held in the voids (pores) of the porous substrate. Porous means having numerous pores. The pores are preferably continuous from one side of the support to the other. The pore sizes should be such as to allow at least a portion of solid electrolyte particles to be retained therein in the formation of the solid electrolyte sheet 11. The pores may be interconnected.

A fibrous sheet is a particularly preferred porous support for providing the solid electrolyte sheet 11 with sufficient self-supporting ability and moderate flexibility. The fibrous sheet includes nonwoven, woven, and knitted fabrics. Nonwoven fabric is particularly preferred. In the case of a fibrous sheet as a porous support, the term "porous" means having interstitial spaces between fibers.

There are various types of nonwovens according to the material (including the fiber length and thickness), manufacturing processes, such as web formation and web consolidation, and the like. The types of the nonwoven fabric that can be used as a porous support sheet are not particularly limited as long as a desired solid electrolyte sheet is provided. Examples of useful nonwovens include orthogonal, filament, staple, wet-laid, dry-laid, air-laid, carded, parallel-laid, cross-laid, random-laid, spun-bonded, melt-blown, flash-spun, chemical-bonded, hydroentangled, needle-punched, stich-bonded, thermal-bonded, burst fiber, tow-opening, split fiber, composite, complex, coated, and laminated nonwovens. Among them preferred is cross-laid nonwoven fabric because of the ease of adjusting the length (X-direction) to width (Y-direction) strength ratio and the basis weight. The strength of cross-laid nonwoven fabric is preferably equal in the X and Y directions. The basis weight of the cross-laid nonwoven fabric may be high or low. The cross-laid nonwoven fabric is exemplified by the polyolefin mesh cloth described in JP 2007-259734A. The detailed basis weights of the nonwoven fabrics are the same as those described in JP 2018-129307A and will not be described redundantly.

The material, porosity, air permeability, thickness, and so on of the porous substrate are the same as those of porous substrate sheets used in general solid electrolyte sheets, for example, the porous sheet disclosed in JP 2018-129307A, and will not be described redundantly.

The solid electrolyte layer serves to conduct lithium ions between positive and negative electrode layers in a solid-state battery. For this purpose, the solid electrolyte forming the solid electrolyte layer preferably contains a crystal phase having an argyrodite crystal structure, which is the crystal structure of a compound group derived from a mineral represented by chemical formula: Ag₈GeS₆. Whether a solid electrolyte has a crystal phase of an argyrodite crystal structure can be confirmed, for example, by X-ray diffractometry (XRD). For instance, the crystal phase of the argyrodite crystal structure shows characteristic diffraction peaks at 2θ = 25.5° ± 1.0°, 30.0° ± 1.0°, and 30.9° ± 1.0° in a diffraction pattern prepared by XRD with CuKα1 radiation. In addition to these peaks, characteristic peaks may appear at 2θ = 15.3° ± 1.0°, 18.0° ± 1.0°, 44.3° ± 1.0°, 47.2° ± 1.0°, 51.7° ± 1.0°, 58.3° ± 1.0°, 60.7° ± 1.0°, 61.5° ± 1.0°, 70.4° ± 1.0°, and 72.6° ± 1.0°, depending on the elemental species making up the solid electrolyte. The diffraction peaks assigned to the argyrodite crystal structure can be identified using, for example, the data in PDF No. 00-034-0688.

The solid electrolyte preferably contains at least a lithium (Li), a phosphorus (P), and a sulfur (S) element, more preferably at least Li, P, S, and a halogen element (X). For example, the preferred solid electrolyte is represented by compositional formula (I): LiₐPS_{b}X_{c}, wherein X is at least one of fluorine (F), chlorine (Cl), bromine (Br), and iodine (I), in terms of Li ion conductivity.

In formula (I), the subscript a representing the Li molar ratio is preferably 3.0 or greater, more preferably 4.0 or greater, even more preferably 5.0 or greater, and preferably 6.5 or smaller, more preferably 5.9 or smaller, even more preferably 5.6 or smaller. When the value a is in this range, the cubic argyrodite crystal structure near room temperature (25°C) is more stable and capable of introducing sufficient Li ion vacancies into the structure, ultimately effectively increasing the Li ion conductivity.

In formula (I), the subscript b is preferably 3.5 or greater, more preferably 4.0 or greater, even more preferably 4.2 or greater, and preferably 5.5 or smaller, more preferably 4.9 or smaller, even more preferably 4.7 or smaller. With the value b being in this range, the cubic argyrodite crystal structure near room temperature (25°C) is more stable, and effectively increased Li ion conductivity is exhibited.

In formula (I), the subscript c is preferably 0.1 or greater, more preferably 1.1 or greater, even more preferably 1.4 or greater, and preferably 2.5 or smaller, more preferably 2.0 or smaller, even more preferably 1.8 or smaller.

The preferred solid electrolyte is also represented by compositional formula (II): Li_{7-d}PS_{6-d}X_{d}, wherein X is as defined above. The composition represented by formula (II) is the stoichiometric composition of an argyrodite crystal phase.

In formula (II), the subscript d is preferably 0.4 or greater, more preferably 0.8 or greater, even more preferably 1.2 or greater and preferably 2.2 or smaller, more preferably 2.0 or smaller, even more preferably 1.8 or smaller.

The preferred solid electrolyte is also represented by compositional formula (III): Li_{7-d-2e}PS_{6-d-e}X_{d}. The argyrodite crystal phase having the composition of formula (III) is produced by, for example, the reaction between an argyrodite crystal phase with the composition of formula (II) and diphosphorus pentasulfate (P₂S₅).

In formula (III), the subscript e indicates the deviation of the Li₂S component from the stoichiometric composition represented by Formula (II). The value e is preferably -0.9 or greater, more preferably -0.6 or greater, even more preferably -0.3 or greater and preferably (-d + 2.0) or smaller, more preferably (-d + 1.6) or smaller, even more preferably (-d + 1.0) or smaller.

The solid electrolyte preferably has an atomic number ratio of the element X to phosphorus (P), X/P, of greater than 1.0, more preferably 1.1 or greater, even more preferably 1.2 or greater, still even more preferably 1.4 or greater and preferably 2.5 or smaller, more preferably 2.3 or smaller, even more preferably 2.2 or smaller. When the X to P atomic number ratio is within this range, the Li ion conductivity is further improved. The atomic number ratio X/P can be determined by, for example, high-frequency inductively coupled plasma emission spectrometry (ICPES) or SEM-EDS analysis.

In particular, when the element X contains at least Cl and Br, the atomic number ratio of (Cl + Br) to P, (Cl + Br)/P, is preferably 1.0 or greater, more preferably 1.1 or greater, even more preferably 1.2 or greater, still even more preferably 1.4 or greater, and preferably 2.5 or smaller, more preferably 2.3 or smaller, even more preferably 2.0 or smaller. With the (Cl + Br)/P being in this range, the Li ion conductivity is preferably further improved. The (Cl + Br)/P can be determined by, for example, ICPES or elemental analysis with a scanning electron microscope equipped with an energy dispersive X-ray spectrometer (SEM-EDS).

Among the solid electrolytes of formulae (I) to (III), the one represented by compositional formula (IV): Li_{7-d}PS_{6-d}Cl_{d1}Br_{d2} is particularly preferred. In formula (IV), the total molar ratio d of Cl and Br (= d1 + d2) is preferably greater than 1.0, more preferably 1.2 or greater, even more preferably 1.4 or greater and preferably smaller than 2.5, more preferably smaller than 2.0, even more preferably 1.8 or smaller, still even more preferably 1.7 or smaller. When the total molar ratio d is in the above range, formation of a different phase is suppressed sufficiently, thereby effectively controlling the reduction in ion conductivity.

In the above formula, the Br to Cl molar ratio, d2/d1, is preferably 0.1, more preferably 0.3 or greater, even more preferably 0.5 or greater and preferably 10 or smaller, more preferably 5 or smaller, even more preferably 3 or smaller. When the d2/d1 is in this range, the lithium ion conductivity is further improved.

In the above formula, the Cl molar ratio d1 is preferably 0.3 or greater, more preferably 0.4 or greater, even more preferably 0.6 or greater, and preferably 1.5 or smaller, more preferably 1.2 or smaller, and even more preferably 1.0 or smaller. With d1 being not less than the above lower limit, the lithium ion conductivity is further improved. With d1 being not more than the above upper limit, the solid electrolyte is easily obtained.

In the above formula, the Br molar ratio d2 is preferably 0.3 or greater, more preferably 0.4 or greater, even more preferably 0.6 or greater and preferably 1.5 or smaller, more preferably 1.2 or smaller, even more preferably 1.0 or smaller. When d2 is not smaller than this lower limit, the solid electrolyte is obtained easily. When d2 is not greater than the above upper limit, the lithium ion conductivity is further increased.

It is preferred for any of the solid electrolytes of formulae (I) through (IV) to contain Br as the element X in terms of further improvement in lithium ion conductivity.

Either one of the first active material layer 12 and second active material layer 13 may include a positive electrode active material, and the other may include a negative electrode active material. When the first active material present in the first active material layer 12 is a positive electrode active material, while the second active material in the second active layer 13 is a negative electrode active material, the battery 10 can be used as, e.g., a bipolar battery. Specifically, a bipolar battery is provided by stacking the laminate structures with the first active material layer 12 of one laminate structure facing the second active material layer 13 of another laminate structure with a current collector therebetween.

The first active material of the first active material layer 12 and the second active material of the second active material layer 13 may be both a positive electrode active material or a negative electrode active material.

Examples of the positive electrode active material include oxide active materials containing lithium and a transition metal, including layered rock-salt type active materials, such as lithium cobaltate (LiCoO₂), lithium nickelate (LiNiO₂), and LiNi_{1/3}Co_{1/3}Mn_{1/3}O₂; spinel type active materials, such as lithium manganate (LiMn₂O₄), Li(Ni_{0.5}Mn_{1.5})O₄, and Li₁₊ₓMn_{2-x-y}M_{y}O₄ (where M is at least one member selected from the group consisting of Al, Mg, Co, Fe, Ni, and Zn); and olivine type active materials, such as lithium titanate (LiₓTiO_{y}), LiFePO₄, LiMnPO₄, LiCoPO₄, and LiNiPO_{4.}

Examples of the negative electrode active material include Si, Si alloys, carbon materials such as graphite and hard carbon, various oxides such as lithium titanate, metallic lithium, and lithium alloys.

The active material content in each of the first and second active material layers 12 and 13 is not particularly limited as long as the functions as an electrode are exhibited. When the first or second active material layer 12 or 13 contains a positive electrode active material, the positive electrode active material content is preferably at least 50 mass%, more preferably 65 mass% or more, even more preferably 75 mass% or more and preferably not more than 99 mass%, relative to the total mass (100 mass %) of the active material layer.

When the first or second active material layer 12 or 13 contains a negative electrode active material, the negative electrode active material content is preferably at least 20 mass%, more preferably 40 mass% or more, even more preferably 70 mass% or more and preferably not more than 99 mass%, relative to the total mass (100 mass %) of the active material layer.

The first and second active material layers 12 and 13 may each contain a solid electrolyte. The solid electrolyte that may be present in the active material layer is not particularly limited but is preferably selected from those recited above. The active material content in the first or second active material layer 12 or 13 is not particularly limited as long as the electrode including the first or second active material layer 12 or 13 exhibits desired functions. The solid electrolyte content in the first or second active material layer 12 or 13 may be, for example, 1 to 80 mass% relative to the total mass (100 mass %) of the respective active material layer.

If desired, the first and second active material layers 12 and 13 may contain an electrically conductive material, a binder, and other additives. Examples of useful conductive materials include carbonaceous materials, such as vapor grown carbon fiber (VGCF) and carbon nanofiber, and metallic materials. Examples of useful binders include polyvinylidene fluoride (PVdF), carboxymethyl cellulose (CMC), butadiene rubber (BR), and styrene-butadiene rubber (SBR), and combinations thereof.

A preferred method for producing the battery of the invention will then be described with particular reference to the production of the battery 10 according to the first embodiment (Fig. 1).

First, a solid electrolyte sheet 11 is prepared by the steps of (1) providing a lamina precursor using a carrier sheet, (2) providing a stack having the lamina precursor, (3) pressing the stack, and (4) removing the carrier sheet from the stack. These steps will be elaborated upon.

### Step 1: Providing a lamina precursor

A carrier sheet having a coating containing a solid electrolyte is provided as a lamina precursor. It is preferred for the carrier sheet to be strong enough to support a coating and be flexible.

The thickness of the carrier sheet is chosen as appropriate to the material of the sheet and is preferably thick enough to be self-supporting. The carrier sheet could be made flexible by adjusting its thickness. The thickness of the carrier sheet is not particularly limited. For example, the thickness may be 5 µm or more, 10 µm or more, or 15 µm or even more, and may be 1000 µm or less, 200 µm or less or 100 µm or even less.

The material of the carrier sheet is preferably at least one of resins, glass, and metals. Namely, the carrier sheet preferably includes at least one of a resin carrier, a glass carrier, and a metal foil carrier. The carrier sheet may have a multilayer structure composed of two or more of a resin, a glass, and a metal foil carrier.

Materials forming the resin carrier include, for example, acrylic resins, polyester resins, cellulose derivative resins, polyvinyl acetal resins, polyvinyl butyral resins, vinyl chloride-vinyl acetate copolymer resins, chlorinated polyolefins, and copolymers of the monomers of these resins.

The glass carrier includes glass cloth, i.e., woven glass fiber fabric.

Materials forming the metal foil carrier include copper, stainless steel, aluminum, nickel, silver, gold, chromium, cobalt, tin, zinc, and alloys thereof.

The coating may be applied directly to the carrier sheet, or there may be one or more additional layers between the carrier sheet and the coating. **In** either case, the coating and the carrier sheet are preferably separable. Separable means that the coating and the carrier sheet can be separated from each other without breaking. The peel strength between the carrier sheet and the coating is preferably 10 N/10 mm or less, more preferably 7 N/10 mm or less, even more preferably 4 N/10 mm or less. When the peel strength is in this range, the carrier sheet and the coating are easily separated from each other. The peel strength is measured by, for example, preparing a 10 mm wide specimen cut from a laminate and testing it for 180° peel strength at a speed of 50 mm/min using a tensile/compression tester.

When the carrier sheet and the coating are separably laminated together, one of the major surfaces of the carrier sheet that is to face the coating can be release treated. The release treatment can be by surface smoothing or by application of a resin release agent.

The coating formed on the carrier sheet contains a solid electrolyte and a solvent. Examples of the solvent include nonpolar solvents, such as heptane, methylcyclohexane, and toluene; aprotic solvents, such as methyl isobutyl ketone and cyclohexanone; and mixtures thereof.

The solid electrolyte in the coating has a particulate form. The particle size of the solid electrolyte in terms of D₅₀, the diameter at which 50% of the particles have a cumulative volume less than or equal to that size, is preferably 0.1 µm or greater, more preferably 0.3 µm or greater, even more preferably 0.5 µm or greater, and preferably 20 µm or smaller, more preferably 10 µm or smaller, even more preferably 5 µm or smaller, as measured by laser diffraction particle size distribution analysis.

The solid electrolyte and the solvent are mixed by using, for example, ultrasonic homogenizers, shakers, high-speed thin-film mixers, dissolvers, homomixers, kneaders, roll mills, sand mills, attritors, ball mills, vibratory mills, and high-speed impeller mills.

The thus prepared mixture (slurry) of the solid electrolyte and the solvent is applied to one side of the carrier sheet by, for example, doctor blade coating, die coating, gravure coating, spray coating, electrostatic coating, bar coating, or the like. As a result, a coating is formed on the surface of the carrier sheet.

In terms of coating properties of the slurry, the coating thus formed preferably has a solid content of 40 mass% or more, more preferably 50 mass% or more, even more preferably 60 mass% or more, and preferably 90 mass% or less, more preferably 80 mass% or less.

The liquid component of the coating may be removed to a moderate degree by, for example, warm air drying, hot air drying, ultrared drying, vacuum drying, or induction heating drying. There is thus provided a lamina precursor composed of the carrier sheet and the solid electrolyte-containing coating formed on the carrier sheet.

### Step 2: Providing a stack having the lamina precursor

The lamina precursor obtained in step 1 is stacked on a support, for example, the above-described porous substrate with the solid electrolyte-containing coating facing the support to make a stack. The coating, which contains a moderate amount of a solvent, partially infiltrate into the pores of the porous substrate. The infiltration of the coating is to be ensured by the subsequent pressing step.

### Step 3: Pressing the stack

The purpose of pressing the stack is to ensure that at least part of the coating, i.e., the particulate solid electrolyte migrate into the pores of the porous substrate when the solid electrolyte sheet has a support formed of a porous substrate. To accomplish this, the stack is pressed in at least the thickness direction. For example, a uniaxial press may be used to press the stack in the thickness direction, or a cold isotropic press may be used to isotropically press the entire stack.

The pressure to be applied is appropriately adjusted according to the type of the porous substrate, the amount of the solid electrolyte in the coating, and the like. Specifically, the pressure is preferably 100 MPa or more, more preferably 350 MPa or more, even more preferably 700 MPa or more.

### Step 4: Removing the carrier sheet from the stack

The carrier sheet is stripped off the pressed stack to provide a desired solid electrolyte sheet 11, i.e., a solid electrolyte sheet 11 in which the support is embedded in the solid electrolyte.

Secondly, a first active material layer 12 and a second active material layer 13 are formed on the major surface 11A and the opposite major surface 11B of the resulting solid electrolyte sheet 11.

To begin with, an electrode slurry containing an active material and a solvent is prepared. The active material is a positive or a negative electrode active material as stated and is typically in a particulate form. The particle size of the active material is, in terms of D₅₀ (the diameter at which 50% of the particles have a cumulative volume less than or equal to that size), is preferably 0.1 µm or greater, more preferably 1 µm or greater, even more preferably 3 µm or greater, and preferably 100 µm or smaller, more preferably 30 µm or smaller, even more preferably 10 µm or smaller, as measured by laser diffraction particle size distribution analysis.

Examples of the solvent include nonpolar solvents, such as heptane, methylcyclohexane, and toluene; aprotic solvents, such as methyl isobutyl ketone and cyclohexanone; and mixtures thereof.

The electrode slurry may contain other materials in addition to the active material and solvent. The other materials include binders, electroconductive materials, solid electrolytes, and various additives.

The electrode slurry can be prepared by means of, e.g., ultrasonic homogenizers, shakers, high-speed thin-film mixers, dissolvers, homomixers, kneaders, roll mills, sand mills, attritors, ball mills, vibratory mills, and high-speed impeller mills.

In terms of coating properties, the solids content of the electrode slurry is preferably 40 mass% or more, more preferably 50 mass% or more, even more preferably 60 mass% or more. The solids content is preferably 90 mass% or less, more preferably 80 mass% or less.

The resulting electrode slurry is applied to the major surface 11A or the opposing surface 11B by, for example, doctor blade coating, die coating, gravure coating, spray coating, electrostatic coating, or bar coating. The resulting coating is dried to remove the liquid component. The residual liquid component content of the dried coating can be adjusted as desired by appropriately adjusting the drying conditions. The drying can be carried out by warm air drying, hot air drying, ultrared drying, vacuum drying, or induction heating drying. This results in a substantially dry active material layer 2. The thicknesses of the first and the second active material layers 12 and 13 can be adjusted as desired by appropriately determining the amounts of the electrode slurries to be applied.

In the fabrication of the battery 20 shown in Fig. 2, the step of die cutting is added after the above steps in Fig. 3.

The resulting battery is useful as a solid-state battery. As used herein, the term "solid-state battery" includes not only all-solid-state in which neither liquid nor gel is used as the electrolyte but also semi-solid-state in which the electrolyte contains not more than 50, 30, or 10 mass% of liquid or gel materials.

In the light of the above embodiments, the following clauses are considered further descriptive of the disclosed invention.
1. A battery comprising a self-supporting laminate structure, the laminate structure comprising a solid electrolyte sheet containing a solid electrolyte and having a first major surface and a second major surface, a first active material layer containing a first active material on the first major surface of the solid electrolyte sheet, and a second active material layer containing a second active material on the second major surface of the solid electrolyte sheet.
2. The battery of clause 1, wherein the solid electrolyte sheet has a first extending portion extending outwardly from the periphery of the first active material layer or, a second extending portion extending outwardly from the periphery of the second active material layer.
3. The battery of clause 1 or 2, wherein, when the electrolyte sheet has a plan view area A, and one of the first and the second extending portions that is larger in area than the other has a plan view area C, the ratio of the area C to the area A is 1/20 or less.
4. The battery of any one of clauses 1 to 3, wherein the solid electrolyte sheet has a thickness of 3 to 100 µm.
5. The battery of any one of clauses 1 to 4, wherein the solid electrolyte sheet has a solid electrolyte content of 50.0 to 99.5 mass%.
6. The battery of any one of clauses 1 to 5, wherein the solid electrolyte sheet includes a support.
7. The battery of clause 6, wherein the support includes a porous substrate having pores, and the solid electrolyte is held in the pores.
8. The battery of any one of clauses 1 to 7, wherein the solid electrolyte contains a crystal phase having an argyrodite crystal structure.
9. The battery of any one of clauses 1 to 8, wherein the first active material is a positive electrode active material, and the second active material is a negative electrode active material.
10. The battery of clause 9, wherein the laminate structure includes a plurality of laminate structures, wherein one of the laminate structures and another laminate structure are connected in series with the first active material layer of the one of the laminate structures and the second active material layer of the another laminate structure facing each other with a current collector in between.
11. The battery of any one of clauses 1 to 8, wherein the first active material and the second active material are both a positive electrode active material or a negative electrode active material.
12. A self-supporting laminate structure for batteries, including a solid electrolyte sheet containing a solid electrolyte, a first active material layer containing a first active material on one major surface of the solid electrolyte sheet, and a second active material layer containing a second active material on the other major surface of the solid electrolyte sheet.
13. The self-supporting laminate structure of clause 12, having a die-cut portion in the peripheral portion thereof, the die-cut portion being adapted to pierce the solid electrolyte sheet, the first active material layer, and the second active material layer in their thickness direction.

### Industrial Applicability

The invention provides a battery having a simple structure and yet capable of preventing the occurrence of a short circuit.

## Claims

1. A battery comprising a self-supporting laminate structure, the laminate structure comprising a solid electrolyte sheet containing a solid electrolyte and having a first major surface and a second major surface, a first active material layer containing a first active material on the first major surface of the solid electrolyte sheet, and a second active material layer containing a second active material on the second major surface of the solid electrolyte sheet.

2. The battery according to claim 1, wherein the solid electrolyte sheet has a first extending portion extending outwardly from the periphery of the first active material layer or, a second extending portion extending outwardly from the periphery of the second active material layer.

3. The battery according to claim 1, wherein, when the electrolyte sheet has a plan view area A, and one of the first and the second extending portions that is larger in area than the other has a plan view area C, the ratio of the area C to the area A is 1/20 or less.

4. The battery according to claim 1, wherein the solid electrolyte sheet has a thickness of 3 to 100 µm.

5. The battery according to claim 1, wherein the solid electrolyte sheet has a solid electrolyte content of 50.0 to 99.5 mass%.

6. The battery according to claim 1, wherein the solid electrolyte sheet comprises a support.

7. The battery according to claim 6, wherein the support comprises a porous substrate having pores, and the solid electrolyte is held in the pores.

8. The battery according to claim 1, wherein the solid electrolyte contains a crystal phase having an argyrodite crystal structure.

9. The battery according to claim 1, wherein the first active material is a positive electrode active material, and the second active material is a negative electrode active material.

10. The battery according to claim 9, wherein the laminate structure comprises a plurality of laminate structures, wherein one of the laminate structures and another laminate structure are connected in series with the first active material layer of the one of the laminate structures and the second active material layer of the another laminate structure facing each other with a current collector therebetween.

11. The battery according to claim 1, wherein the first active material and the second active material are both a positive electrode active material or a negative electrode active material.

12. A self-supporting laminate structure for batteries, comprising a solid electrolyte sheet having a first major sides and a second major surface and containing a solid electrolyte, a first active material layer containing a first active material on the first major surface of the solid electrolyte sheet, and a second active material layer containing a second active material on the second major surface of the solid electrolyte sheet.

13. The self-supporting laminate structure according to claim 12, having a die-cut portion being adapted to pierce the solid electrolyte sheet, the first active material layer, and the second active material layer in their thickness direction.
